# EUROPÄISCHE PATENTSCHRIFT

(11) **EP 2 470 785 B1**
(45) Veröffentlichungstag und Bekanntmachung des Hinweises auf die Patenterteilung: **03.10.2018**
(21) Anmeldenummer: 10757016.0
(22) Anmeldetag: 18.08.2010
(51) Int. Cl.: F03D 80/00

(54) **EINRICHTUNG ZUR ENERGIEÜBERTRAGUNG ZWISCHEN EINEM STRÖMENDEN MEDIUM UND EINER KURBELWELLE**
DEVICE FOR TRANSMITTING ENERGY BETWEEN A FLOWING MEDIUM AND A CRANKSHAFT
DISPOSITIF DE TRANSFERT D'ÉNERGIE ENTRE UN MILIEU EN MOUVEMENT ET UN VILEBREQUIN

(30) Priorität: 27.08.2009 DE 102009039072
(43) Veröffentlichungstag der Anmeldung: 04.07.2012
(73) Patentinhaber: Universität Kassel, 34125 Kassel (DE)
(72) Erfinder: LAWERENZ, Martin, 34128 Kassel (DE)
(74) Vertreter: Patentanwälte Walther Hinz Bayer PartGmbB
(86) Internationale Anmeldenummer: PCT/DE2010/000973
(87) Internationale Veröffentlichungsnummer: WO 2011/023166

(56) Entgegenhaltungen:
- WO-A1-2004/110859
- DE-A1- 3 522 995
- DE-A1-102006 052 584
- FR-A1- 2 278 565
- US-B1- 7 311 496

## Beschreibung

Die vorliegende Erfindung betrifft Einrichtung zur Energieübertragung zwischen einem strömenden Medium und einer Kurbelwelle, an der ein Motor oder ein Generator angeordnet ist, wobei die Einrichtung eine oszillierende Tragfläche umfasst.

Bei der vorliegenden Erfindung handelt es sich um eine Einrichtung, die eine oszillierende Bewegung einer Tragfläche in einem strömenden Medium, insbesondere in Flüssen, Meeren oder in der Atmosphäre so steuert, dass die an der umströmten Tragfläche angreifenden Kräfte in Verbindung mit der Bewegung des Körpers eine Energieübertragung von dem strömenden Medium an die Einrichtung bewirken. Die bekannten Wasserkraftanlagen, wie Wasserräder und Wasserturbinen, erfordern ein ausreichendes Gefälle, um eine wirtschaftliche Energieübertragung zu ermöglichen. Dies setzt in der Regel entsprechende geografische Verhältnisse voraus und ist üblicherweise mit dem Aufstau des Wassers durch Dämme verbunden.

Die vorliegende Erfindung nutzt dagegen die kinetische Energie des strömenden Wassers. Somit können Staudämme mit weitreichenden Eingriffen in die Landschaft vermieden werden.

Bei asymmetrischen oder symmetrischen Körpern, die gegenüber ihrer Symmetrieachse asymmetrisch angeströmt werden, entstehen durch die Umströmung Kräfte, die zur Energieübertragung genutzt werden können. Werden solche Körper z. B. in Form einer Tragfläche in Richtung der an der Tragfläche angreifenden Kräfte bewegt, findet eine Energieübertragung vom strömenden Medium auf den Körper statt, der seinerseits diese Energie an die ihn steuernde Vorrichtung abgibt. Bei einer den angreifenden Kräften entgegengerichteten Bewegungen findet eine Übertragung der Energie von der steuernden Vorrichtung auf das strömende Fluid statt. Hieraus wird deutlich, dass bei einer oszillierenden Bewegung der Phasenwinkel zwischen der periodischen Änderung der Strömungskräfte und der periodischen Bewegung des Körpers für die Richtung der Energieübertragung maßgeblich ist.

Obwohl nur wenige technische Anwendungen des beschriebenen Prinzips existieren, sind Schriften bekannt, in denen die Funktionsweise einer oszillierenden Tragfläche zur Energiegewinnung beschrieben wird. In der Veröffentlichung von K. Jones, M.F. Platzer und S. Davids: "Oscillating-Wing Power Generator", erschienen in: Proceedings of the 3rd ASME/JSME FluidsEngeneering Conference July 18-23. 1999, als Beitrag mit der Nummer FEDSM99-7050, wird ein Mechanismus zur Energieübertragung von einer Gewässerströmung an einen oszillierenden Flügel vorgestellt und in seiner Funktionsweise theoretisch und experimentell analysiert. Der Flügel führt dabei eine lineare Auf- und Abbewegung durch, die durch Schienen geführt wird. Über Gestänge, Kipphebel und Schwingarme wird dieser Bewegung eine Drehung des Flügels überlagert.

In EP 1071882B1 wird eine Erfindung offenbart, die das Ein- und Auftauchen eines Körpers in einem strömenden Gewässer beschreibt. Mit Hilfe von seitlich aus dem Körper ragenden Steuerelementen wird diese Bewegung erzeugt, wobei die Schubrichtung der Steuerelemente umgekehrt werden kann. Die Bewegung des Körpers wird mithilfe unterschiedlicher Vorrichtungen zur Energiegewinnung genutzt. Es werden keine Angaben zur Steuerung der Steuerelemente gemacht.

Aus der WO 2005/090777 A1 ist eine Vorrichtung zur Energiegewinnung aus Strömungen bekannt, die eine lineare Führung der Tragfläche senkrecht zur Strömungsrichtung durch zwei symmetrisch angeordnete Gestänge mit zugehörigen Gelenken enthält. Zur Erzeugung einer Drehbewegung der Tragfläche werden ein Zahnstangengetriebe sowie ein Seilzugsystem mit hydraulischen Aktuatoren bzw. Motoren eingesetzt.

Eine sich hin und her bewegende Reihe von Tragflächen zur Energieübertragung aus einer Wasserströmung ist ebenfalls aus US5548956A bekannt. Die Energie übertragende Funktion übernimmt hier ein Seil, das mit den Tragflächen verbunden ist. Weitere Seile, die mit den Tragflächen auf der Anströmseite verbunden sind, dienen zur Steuerung des Anstellwinkels, sodass die Richtung der Strömungskräfte umgekehrt wird und die gewünschte Bewegung zustande kommt.

Aus der US 7,311,496 B1 ist eine Vorrichtung zur Erzeugung von elektrischer Energie in einem strömenden Medium offenbart. Hierbei ist ein schwenkbarer Flügel vorgesehen, der sich in dem strömenden Medium befindet. Verbindungsstangen sind jeweils an einem ersten Ende des Flügels an diesem schwenkbar angebracht. Am gegenüberliegenden Ende der Achse, befindet sich ein Kurbelelement, das an einem zweiten Ende jeder der Verbindungsstangen befestigt ist und durch Bewegung der angebrachten Verbindungsstangen um eine Schwenkachse drehbar ist. Darüber hinaus gibt es ein Gehäuse, das den Flügel trägt, ein im Gehäuse angeordnetes Zahnradsystem, eine Achse, die jedes der Kurbelglieder und das Zahnradsystem miteinander verbindet, und einen elektrischen Generator, der in dem Gehäuse angeordnet ist und von dem Zahnradsystem angetrieben wird.

Die in US6323563B1 dargestellte Erfindung eines Systems zur hydrodynamischen Energieerzeugung mithilfe einer oszillierenden Tragfläche ist bekannt. Die Bewegung der Tragfläche wird hier über einen gelenkig verbundenen Hebel auf eine nicht näher spezifizierte Leistungseinheit übertragen. Die Drehbewegung der Tragfläche wird in diesem Fall durch eine an der Hinterkante der Tragfläche gelenkig gelagerte Klappe hervorgerufen, die ihrerseits durch eine Steuereinheit und ein Hebelsystem in ihrer Stellung relativ zur Tragfläche bewegt wird.

Bekannt ist ebenfalls die in US2003/0123983A1 dargestellte Erfindung eines selbsttrimmenden oszillierenden Flügelsystems. Hier wird über einen beweglichen Hebel ein Flügel in eine oszillierende Bewegung durch ein strömendes Medium versetzt, wobei die Anlenkung des Flügels vor dem Neutralpunkt erfolgt. Mithilfe einer Klappe an der Hinterkante wird der Anstellwinkel des Flügels so verändert, dass eine Umkehrung der Bewegung zustande kommt. Die oszillierende Hebelbewegung wird über ein Pleuel auf einen Kurbeltrieb übertragen, der zur Entnahme der Leistung dient. An das Pleuel ist ebenfalls ein Mechanismus gekoppelt, der die Stellung der Klappe steuert.

Aus der DE 10 2006 052 584 A1 ist des Weiteren eine Einrichtung der eingangs genannten Art bekannt, bei der eine Kurbelwelle mit zwei Kurbeltrieben vorgesehen ist, wobei an dem einen Kurbeltrieb durch die Verbindung mit feststehenden Kurbelgliedern für eine oszillierende Bewegung der Tragfläche gesorgt wird, wobei über einen zweiten Kurbeltrieb die Steuerung der Drehbewegung der Tragfläche in Abhängigkeit von der oszillierenden Bewegung der Tragfläche erfolgt. Das heißt, dass die Stellung der Tragfläche zum strömenden Medium in Form einer Zwangssteuerung in Abhängigkeit von der oszillierenden Bewegung der Tragfläche in dem strömenden Medium vorgenommen wird. Die oszillierende Bewegung der Tragfläche einerseits und die Drehbewegung der Tragfläche andererseits sind somit einander überlagerte Bewegungen.

Die aus dem Stand der Technik bekannte Einrichtung ist aufgrund der Vielzahl an Hebel- und Kurbeltrieben kompliziert und damit auch schlussendlich störanfällig. Dies gilt insbesondere in Anbetracht der Tatsache, dass solche Vorrichtungen bevorzugt in strömenden Fluiden, also z. B. im Meer oder einem Fluss, eingesetzt werden, was besondere Anforderungen an die Robusteinheit der Auslegung einer solchen Anlage stellt.

Der der Erfindung zugrundeliegende Gedanke besteht demzufolge darin, eine Vorrichtung der eingangs genannten Art, so wie sie in ihrem Bewegungsablauf aus der DE 10 2006 052 584 A1 vom Grundsatz her bekannt ist, bereitzustellen, die jedoch einfacher und insbesondere auch robuster in ihrem Aufbau gestaltet ist.

Zur Lösung der Aufgabe wird bei einer Einrichtung zur Energieübertragung zwischen einem strömenden Medium und einer Kurbelwelle, an der ein Motor oder ein Generator angeordnet ist, wobei die Einrichtung eine oszillierende Tragfläche aufweist. Erfindungsgemäß wird vorgeschlagen, dass die Tragfläche an einer Steuerwelle starr befestigt ist, wobei die Steuerwelle von einem Ausleger drehbar gehalten ist, wobei der Ausleger an einem drehbaren Körper angeordnet ist, wobei der drehbare Körper durch eine insbesondere flexible Kraftübertragungseinrichtung durch einen ersten Kurbeltrieb mit der Kurbelwelle in Verbindung steht, wobei auf der Kurbelwelle ein zweiter Kurbeltrieb angeordnet ist, wobei der zweite Kurbeltrieb durch ein Getriebe mit mindestens einer insbesondere flexiblen Kraftübertragungseinrichtung mit der Steuerwelle derart in Verbindung steht, dass in Abhängigkeit von der Position des Auslegers die Tragfläche eine dazu korrespondierende Stellung zu der Strömungsrichtung des strömenden Mediums einnimmt.

Insbesondere durch die Ausbildung der flexiblen Kraftübertragungseinrichtung als Riemen oder Kette wird ein relativ gesehen einfacher, kostengünstiger und sehr robuster Aufbau einer Einrichtung zur Energieübertragung zwischen einem strömenden Medium und einer Kurbelwelle bereitgestellt.

Anstelle einer flexiblen Kraftübertragungseinrichtung kann auch beispielsweise eine Zahnstange zum Einsatz kommen, die mit dem drehbaren Körper und/oder dem Getriebekörper kämmt.

Vorteilhafte Merkmale und Weiterbildungen zu der Erfindung ergeben sich aus den Unteransprüchen.

So ist insbesondere vorgesehen, dass das Getriebe, das die Steuerwelle antreibt, mindestens zwei in Reihe geschaltete flexible Kraftübertragungseinrichtungen umfasst, wobei die erste Kraftübertragungseinrichtung an ihrem einen Ende mit dem zweiten Kurbeltrieb und mit ihrem anderen schlaufenartigen Ende auf einem drehbaren ersten Getriebekörper angeordnet ist. Der drehbare erste Getriebekörper fungiert als Zwischenstufe in dem Getriebe, entweder mit oder ohne Über- bzw. Untersetzung, und ist mit einem drehbaren zweiten Getriebekörper starr gekoppelt, wobei der zweite Getriebekörper durch eine flexible Gliedschlaufe mit der Steuerwelle in Verbindung steht. Hierbei kann weiterhin vorgesehen sein, dass die Steuerwelle einen dritten Getriebekörper für die flexible Gliedschlaufe aufweist, wobei der dritte Getriebekörper im Durchmesser gleich oder unterschiedlich zu dem zweiten Getriebekörper ausgebildet sein kann, um eine entsprechende Über- bzw. Untersetzung bereitzustellen.

Insbesondere durch die Ausbildung der flexiblen Kraftübertragungseinrichtung in Form von Riemen oder Gliederkette oder -ketten bzw. auch der Gliedschlaufe als Riemen oder Gliederkette z. B. aus Kunststoff wird in Verbindung mit der Ausbildung des drehbaren Körpers und des Getriebekörpers als Trommel oder Zahnrad eine verhältnismäßig einfache und robuste Ausbildung der Einrichtung zur Energieübertragung bereitgestellt.

Im Einzelnen ist des Weiteren vorgesehen, dass der erste Kurbeltrieb zwei Kurbelarme umfasst, die seitlich versetzt auf der Kurbelwelle angeordnet sind, wobei jeder Kurbelarm ein flexibles Kraftübertragungselement der flexiblen Kraftübertragungseinrichtung aufweist, wobei die beiden Kraftübertragungselemente mit und gegen den Uhrzeigersinn auf dem drehbaren Körper des Auslegers angeordnet sind. In Bezug auf den zweiten Kurbeltrieb ist ebenfalls vorgesehen, dass dieser zwei Kurbelarme umfasst, die seitlich versetzt auf der Kurbelwelle angeordnet sind, wobei jeder Kurbelarm ein flexibles Kraftübertragungselement der Kraftübertragungseinrichtung des Getriebes aufweist, wobei die beiden Kraftübertragungselemente mit und gegen den Uhrzeigersinn auf dem ersten Getriebekörper angeordnet sind. Hieraus wird deutlich, dass bei Rotation der Kurbelwelle die Kraftübertragungsglieder in Form von Riemen oder Ketten auf dem drehbaren Körper und dem Getriebekörper, die insbesondere als Trommeln oder Zahnräder ausgebildet sind, wechselweise auf- oder abgewickelt werden, während die Kurbelwelle kontinuierlich rotiert, da sich die Kraftübertragungsglieder aufgrund der versetzten Anordnung der Kurbelarme und der Anlenkung der Kraftübertragungsglieder exzentrisch zur Mittellängsachse der Kurbelwelle frei bewegen können. Dies gilt für beide Kurbeltriebe. Grundsätzlich möglich wäre auch der Einsatz eines durchgängigen Kraftübertragungsgliedes, wobei dann ein solches z. B. als Band oder Riemen mehrfach umschlungen auf dem drehbaren Körper oder Getriebekörper angeordnet sein müsste. Eine äquivalente Verwirklichung ist auch mit Zahnstangen möglich, wie dies bereits erwähnt wurde.

Des Weiteren ist insbesondere vorgesehen, dass die Kurbeltriebe selbst in einem festen Winkel zueinanderstehen, wobei jedoch der Winkel der Kurbelarme beider Kurbeltriebe zueinander veränderbar ist, um hierdurch gegebenenfalls die Ansteuerung der Tragfläche zu verändern.

Bei der Umsetzung der oszillierenden Drehbewegung des drehbaren Körpers einerseits und des Getriebekörpers andererseits auf die Kurbelwelle durch die jeweiligen Kurbelarmpaare, fungieren die flexiblen Kraftübertragungsglieder die beispielsweise als Kettentrieb ausgebildet sein können, als Obertrum, wenn sie Zugkräfte übertragen müssen, und Untertrum wenn sie kraftlos mitlaufen. Durch die oszillierende Bewegung des drehbaren Körpers einerseits und des ersten Getriebekörpers andererseits fungiert jedes Kraftübertragungsglied einmal als Ober- und einmal als Untertrum.

Es hat sich nun herausgestellt, dass das Obertrum und das Untertrum phasenversetzt zueinander verlaufen. Dies hat zur Folge, dass das Untertrum, das nicht auf Zug beansprucht wird, eine Reserve bildet, und demzufolge schlaff durchhängt, und zwar so lange, bis das Untertrum bei Einleitung einer Reversierbewegung des ersten Getriebekörpers und des drehbaren Körpers wieder die Aufgabe eines Obertrums übernimmt. Die Bildung einer solchen Reserve desjenigen flexiblen Kraftübertragungsgliedes, das keine Zugkräfte überträgt, hat im Prinzip keinen Einfluss auf die Funktionalität der Einrichtung insgesamt. Es besteht lediglich die Gefahr, dass das flexible Kraftübertragungsglied aufgrund der Bildung einer Reserve vom Getriebekörper bzw. drehbaren Körper rutscht. Darüber hinaus ist festzuhalten, dass in dem Moment, in dem das flexible Kraftübertragungselement nach Bildung der Reserve auf Zug beansprucht wird, die ruckhaft erfolgt, was auf Dauer Schäden an der Einrichtung insgesamt und an den Lagern insbesondere bewirken kann.

Hier Abhilfe zu schaffen, ist ebenfalls Aufgabe der vorliegenden Erfindung. Die Bildung einer solchen Reserve kann zum einen dadurch verhindert werden, dass eine Längenkompensationseinrichtung für die flexible Kraftübertragungsglieder vorgesehen ist. Die Kompensierung der Länge der flexiblen Kraftübertragungsglieder im Bereich des Untertrums kann insbesondere dadurch erreicht werden, dass die Längenkompensationseinrichtung als Federeinrichtung ausgebildet ist, wobei die Auslenkung der Federeinrichtung auf den Betrag des Phasenversatzes begrenzbar ist. Das heißt, die Begrenzbarkeit der Auslenkung der Federeinrichtung ist insofern von Relevanz, als die flexiblen Kraftübertragungsglieder in der Lage sein müssen Zugkräfte zu übertragen, wenn sie als Obertrum arbeiten. Das heißt, dass dann das flexible Kraftübertragungsglied, beispielsweise eine Kette oder ein Riemen unter Zugbeanspruchung unelastisch, das heißt nicht dehnfähig sein muss. Die Federeinrichtung kann zum einen eine Zugfeder umfassen oder aber kann als Kolbenzylinderanordnung ausgebildet sein. Im Einzelnen ist in diesem Zusammenhang vorgesehen, dass die Federeinrichtung mit ihrem einen Ende am Kurbelarm angeordnet ist, wobei der Kurbelarm einen Anschlagrahmen aufweist, wobei die Auszugsweite der Federeinrichtung durch den Anschlagrahmen begrenzt ist. Hierbei verfügt vorteilhaft die Federeinrichtung über einen Stopper, der gegen einen Anschlag am Anschlagrahmen anschlägt, wenn das flexible Kraftübertragungsglied auf Zug beansprucht wird.

Eine weitere Möglichkeit der Kompensation der Reserve des als Untertrum arbeitenden flexiblen Kraftübertragungsgliedes besteht darin, den Winkel zwischen den Kurbelarmen eines Kurbelarmpaares zu vermindern, wobei der gewählte Winkel u. a. abhängig von dem Abstand der beiden Achsen, die die Kurbelarme einerseits und den Getriebekörper und den drehbaren Körper andererseits tragen, und dem Durchmesser sowohl des ersten Getriebekörpers als auch der Trommel als drehbaren Körper ist und auch von der Länge der Kurbelarme. Der Winkel zwischen den Kurbelarmen eines Kurbelarmpaares beläuft sich auf ≤ 180 Grad aber ≥ 90 Grad, vorzugsweise liegt er zwischen 130 und 160 Grad. Hierbei ist zu berücksichtigen, dass der Winkel zwischen den Kurbelarmen des einen Kurbelarmpaares unterschiedlich zu dem des anderen Kurbelarmpaares ist. Dies deshalb, weil die Hebelarme und Längenverhältnisse für die Auf- und Abbewegung des Flügels andere sind, als für die Drehbewegung des Flügels.

Eine weitere Möglichkeit um ein Durchhängen zu vermeiden besteht darin, dass der drehbare Körper und/oder der erste Getriebekörper eine im Querschnitt ovale Form zeigen. Grundsätzlich gilt, dass eine Kombination aller drei Maßnahmen am ehesten geeignet ist zu verhindern, dass die flexiblen Kraftübertragungsmittel durchhängen, wenn sie als Untertrum laufen.

Anhand der Zeichnungen wird die Erfindung nachstehend beispielhaft näher erläutert.
- Fig. 1: zeigt die Einrichtung in perspektivischer Darstellung, wobei die Kurbelarme im Winkel von 180 Grad zueinander stehen.
- Fig. 2: zeigt eine Ausführungsform, bei der die Kurbelarme gekröpft zueinander stehen.
- Fig. 3: zeigt eine Längenkompensationseinrichtung in schematischer Darstellung;
- Fig. 4: zeigt die ovale Ausbildung sowohl des Getriebekörpers als auch des drehbaren Körpers;
- Fig. 4a,b: zeigen jeweils eine Schnittdarstellung aus Fig. 4;
- Fig. 5: zeigt schematisch den Phasenversatz zwischen Ober- und Untertrum.

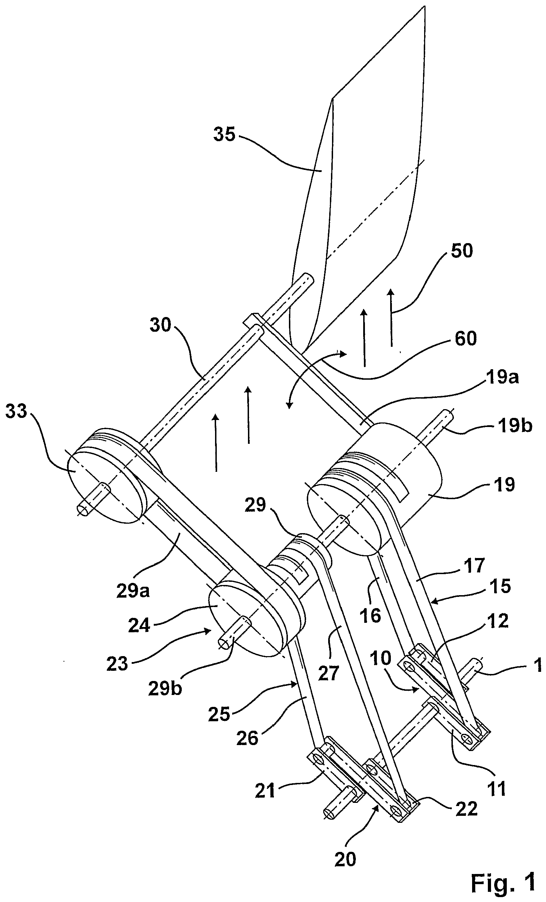

Figur 1 zeigt eine perspektivische Darstellung der Einrichtung, wobei die Kurbelwelle mit 1 bezeichnet ist. An der Kurbelwelle 1 befinden sich ein erster Kurbeltrieb 10 und ein zweiter Kurbeltrieb 20. Die beiden Kurbeltriebe 10 und 20 zeigen jeweils seitlich nebeneinander versetzt angeordnete Kurbelarme 11, 12 und 21, 22 auf. Der erste Kurbeltrieb 10 weist eine mit 15 bezeichnete Kraftübertragungseinrichtung auf, die im vorliegenden Fall aus zwei flexiblen Kraftübertragungselementen 16, 17 besteht, die an ihrem einen Ende auf dem drehbaren Körper 19 mit und gegen den Uhrzeigersinn angeordnet sind, und mit ihrem anderen Ende an den Kurbelarmen 11, 12 des Kurbeltriebes 10 drehbar durch Lager befestigt sind. Der mit 19 bezeichnete als Trommel ausgebildete drehbare Körper besitzt den Ausleger 19a, der endseitig die mit 30 bezeichnete Steuerwelle für die Tragfläche 35 drehbeweglich aufnimmt.

Betrachtet man nunmehr den zweiten Kurbeltrieb 20 mit den beiden Kurbelarmen 21 und 22, die ebenfalls seitlich versetzt zueinander auf der mit 1 bezeichneten Kurbelwelle angeordnet sind, so erkennt man, dass auch hier die Kurbelarme 21 und 22 mit einer mit 25 bezeichneten Kraftübertragungseinrichtung verbunden sind, umfassend zwei Kraftübertragungselemente 26 und 27 in Form von Riemen, die auf dem ersten Getriebekörper 29 derart angeordnet sind, dass diese jeweils mit und gegen den Uhrzeigersinn auf dem ersten Getriebekörper 29 befestigt sind. Der ersten Getriebekörper 29 steht in Verbindung mit einem zweiten Getriebekörper 24, wobei der zweite Getriebekörper 24 durch eine Kraftübertragungseinrichtung 29a in Form einer flexiblen Gliedschlaufe mit der Steuerwelle 30 in Verbindung steht. Die Steuerwelle 30 weist zur Aufnahme der flexiblen Gliedschlaufe 29a einen dritten Getriebekörper 33 auf, wobei der dritte Getriebekörper 33 den gleichen Durchmesser aufweist, wie der zweite Getriebekörper 24. Erkennbar ist, dass durch die mit 25 bezeichnete Kraftübertragungseinrichtung in Verbindung mit dem ersten Getriebekörper 29, dem zweiten Getriebekörper 24, der flexiblen Gliedschlaufe 29a sowie dem dritten Getriebekörper 33, der auf der Steuerwelle 30 angeordnet ist, ein Getriebe 23 bereitgestellt wird, durch das die Tragfläche 35 in Abhängigkeit von der oszillierenden Bewegung des Auslegers 19 jeweils eine der momentanen Stellung des Auslegers entsprechende Stellung im strömenden Medium einnimmt.

Die Funktionsweise der Vorrichtung wird nunmehr im Einzelnen erklärt: Die Strömungsrichtung des Fluides ist durch die Pfeile 50 gekennzeichnet. Zumindest der Flügel befindet sich hierbei innerhalb des Fluides. Der drehbare Körper 19 (Trommel) ist auf einer Achse 19b angeordnet. Der erste Getriebekörper 29 und der zweite Getriebekörper 24 sind auf einer Achse 29b angeordnet, die die gleiche Achse sein kann, wie die Achse 19, wobei die Getriebekörper 29 und 24 starr miteinander gekuppelt sind. Betrachtet man nun die Tragfläche 35, so ergibt sich, dass aufgrund der Anströmung der Tragfläche 35 durch das Medium entsprechend den Pfeilen 50 die Tragfläche eine Stellung zum strömenden Medium einnimmt, die entweder dafür sorgt, dass die Tragfläche aufgrund ihrer Ausrichtung relativ zur Anströmrichtung steigt, also nach oben geht, oder fällt.

Der Ausleger 19a ist starr mit dem als Trommel ausgebildeten drehbaren Körper 19 verbunden. Der Körper 19 ist drehbar auf der Achse 19b angeordnet. Die als flexible Kraftübertragungselemente der Kraftübertragungseinrichtung ausgebildeten Riemen 16 und 17, die endseitig an den Kurbelarmen 11 und 12 angelenkt sind, umschlingen den drehbaren Körper 19 in einem Winkel von nahezu 270°, und zwar jeweils einmal in Uhrzeigerrichtung und einmal entgegen der Uhrzeigerrichtung. Wenn sich der drehbare Körper 19 aufgrund der Schwenkbewegung des Auslegers 19a (Pfeil 60) mit der daran drehbeweglich endseitig angeordneten Tragfläche 35 zwischen den oberen und unteren Totpunktlagen dreht, dann dreht sich auch die Kurbelwelle um 360°. Die Steuerung der Tragfläche 35 durch die Steuerwelle 30 erfolgt durch das mit 23 bezeichnete Getriebe. Es handelt sich hierbei um eine Zwangssteuerung der Tragfläche durch das Getriebe 23, wobei die Stellung der Tragfläche abhängig ist von der Stellung des Auslegers 19a. Die Zwangssteuerung ist deshalb gegeben, weil schlussendlich beide Kurbeltriebe 10, 20 auf ein und derselben Kurbelwelle angeordnet sind, also eine synchrone Bewegung ausführen.

Der zuvor angesprochene Umschlingungswinkel von ca. 270° gilt exemplarisch; grundsätzliche ist der erforderliche Umschlingungswinkel abhängig von der Länge der Kurbelarme und dem Durchmesser des drehbaren Körpers. Das heißt, bei im Durchmesser großem drehbaren Körper und kurzen Kurbelarmen kann der Winkel auch durchaus geringer sein.

Im Einzelnen ist in Bezug auf das Getriebe 23 vorgesehen, dass die erste flexible Kraftübertragungseinrichtung des Getriebes, umfassend die beiden flexiblen Kraftübertragungselemente 26 und 27 in Form von Riemen, endseitig einen ersten Getriebekörper 29 umschlingen, wobei die Kraftübertragungselemente 26, 27 endseitig mit den Kurbelarmen 21, 22 in Verbindung stehen. Auch hierbei gilt, wie oben ausgeführt, dass der Umschlingungswinkel abhängig ist von der Länge der Kurbelarme und dem Durchmesser des drehbaren Körpers. Da diese ebenso auf der Kurbelwelle 1 angeordnet sind, wie auch die Kurbelarme 11 und 12, erfolgt die Bewegung der Kurbelarme 21, 22 entsprechend. Der erste Getriebekörper 29 ist mit dem zweiten Getriebekörper 24 starr verbunden. Auch diese beiden Getriebekörper 24, 29 befinden sich auf einer Achse 29b, wobei durch den unterschiedlichen Durchmesser des ersten Getriebekörpers zum zweiten Getriebekörper eine Übersetzung erfolgt. Durch die flexible Gliedschlaufe 29a wird der dritte Getriebekörper 33, der mit der Steuerwelle 30 fest verbunden ist, angetrieben, mithin auch die Tragfläche 35, die an der Steuerwelle 30 starr angeordnet ist.

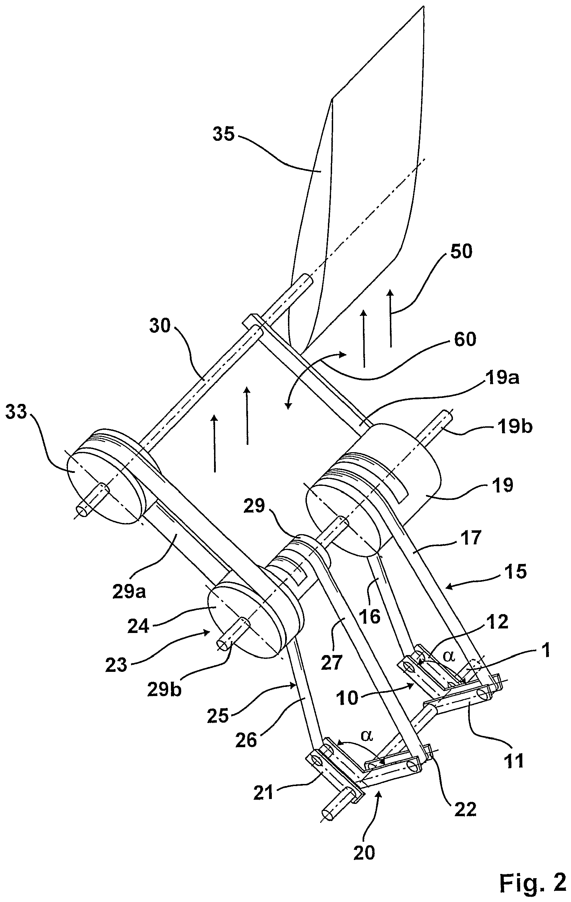

Aus der Darstellung gemäß Figur 2 ergibt sich im Unterschied zu Figur 1, dass dort die Kurbelarme 11, 12 bzw. 21, 22 gekröpft zueinander stehen. Im Einzelnen ist vorgesehen, dass der Winkel zwischen den Kurbelarmen 11, 12 etwa 135 Grad, wohingegen der zwischen den beiden Kurbelarmen 21, 22 etwa 150 Grad beträgt. Der gekröpfte Winkel hängt von folgenden Parametern ab:
1. der Länge der Kurbelarme;
2. dem Abstand der beiden Achsen1, 19b;
3. dem Durchmesser des drehbaren Körpers 19 und des Getriebekörpers 29.

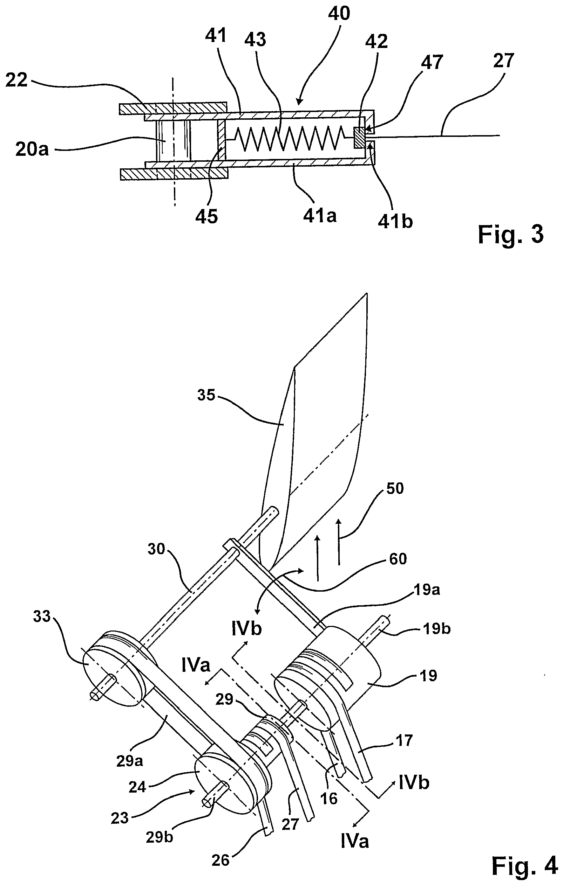

Aus Figur 3 ist die Längenkompensationseinrichtung 40 erkennbar. Verdeutlicht wird das Prinzip der Längenkompensation anhand der Darstellung des Kurbelarmes 22, wobei der Kurbelarm 22 eine Achse 20a aufweist, um die der Anschlagrahmen 41 herum schwenkbar gelagert ist. Der Anschlagrahmen 41 besitzt zwei parallel zueinander verlaufenden Träger 41a, wobei die Träger 41a durch eine Traverse 45 verbunden sind. An der Traverse 45 ist die insgesamt mit 43 bezeichnete Feder befestigt, die am gegenüberliegenden Ende den Stopper 42 aufweist. An dem Stopper 42 befindet sich das flexible Kraftübertragungsglied 27, das beispielsweise als Riemen oder als Kette ausgebildet ist. Zur Durchführung des flexiblen Kraftübertragungsgliedes 27 ist in dem Anschlagrahmen 41 ein Schlitz 41b vorgesehen. Der Stopper 42 schlägt an den durch den Anschlagrahmen 41 vorgegebenen Anschlag 47 im Bereich des Schlitzes an, und zwar in dem Moment, wo das flexible Kraftübertragungsglied 27 auf Zug beansprucht wird.

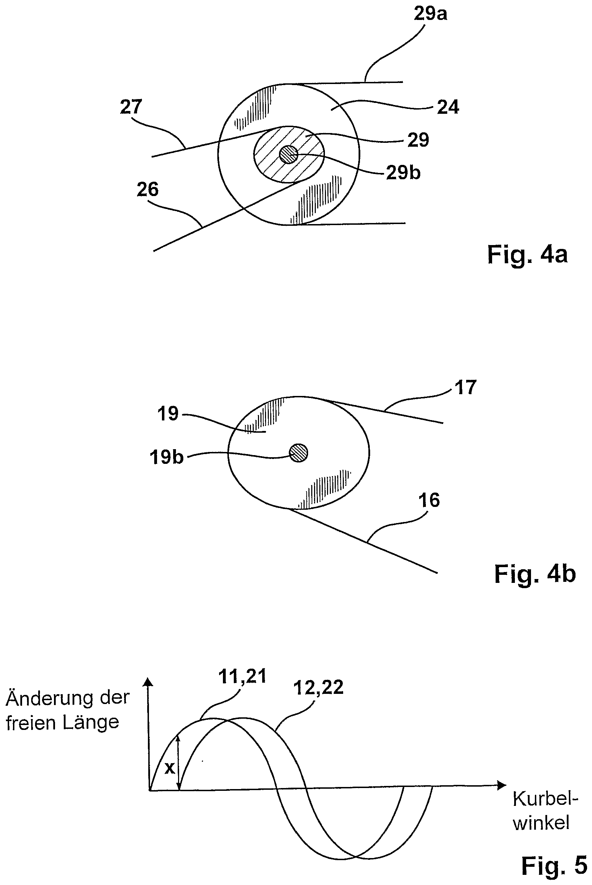

Aus den Darstellungen gemäß den Figuren 4, 4a, 4b ergibt sich die ovale Ausbildung sowohl des Getriebekörpers 29 als auch des drehbaren Körpers 19. In diesem Zusammenhang wird insbesondere auf die Figur 4a und 4b verwiesen. Der Figur 5 ist der Phasenversatz zwischen den beiden flexiblen Kraftübertragungsgliedern 15,16 bzw. 26, 27 eines Kurbeltriebs 10, 20 bzw. den Kurbelarm eines Kurbeltriebs 10, 20 zueinander erkennbar. Die Höhe des Pfeiles x in der Darstellung gemäß Figur 5 stellt den Phasenversatz betragsmäßig zu einem bestimmten Zeitpunkt dar. Der Figur 5 lässt sich des Weiteren entnehmen, dass sich der Betrag des Phasenversatzes über die Zeit, d. h. in Abhängigkeit vom Kurbelwinkel ändert. Das heißt, der Phasenversatz nimmt über eine komplette Kurbeldrehung immer unterschiedliche Werte an. Insofern ist es, wie bereits an anderer Stelle erläutert, sinnvoll, dass dem über die Zeit veränderlichen Phasenversatz durch die Kombination von zwei oder mehrerer der oben beschriebenen Maßnahmen Rechnung getragen wird, um ein Durchhängen des Untertrums, also des Kraftübertragungsgliedes, das keine Kraft überträgt, zu verhindern. Durch eine gekröpfte Ausführung der beiden Kurbelarme eines Kurbelarmpaares wird bereits ein Teil des Phasenversatzes kompensiert. Der übrige Teil des Phasenversatzes wird z. B. durch die Längenkompensationseinrichtung aufgefangen.

## Patentansprüche

1. Einrichtung zur Energieübertragung zwischen einem strömenden Medium und einer Kurbelwelle (1), an der ein Motor oder Generator angeordnet ist, wobei die Einrichtung eine oszillierende Tragfläche (35) umfasst,
**dadurch gekennzeichnet,**
**dass** die Tragfläche (35) an einer Steuerwelle (30) starr befestigt ist, wobei die Steuerwelle (30) von einem Ausleger (19a) drehbar gehalten ist, wobei der Ausleger (19a) an einem drehbaren Körper (19) angeordnet ist, wobei der drehbare Körper (19) durch eine Kraftübertragungs-einrichtung (15) durch einen ersten Kurbeltrieb (10) mit der Kurbelwelle (1) in Verbindung steht,
wobei auf der Kurbelwelle (1) ein zweiter Kurbeltrieb (20) angeordnet ist, wobei der zweite Kurbeltrieb (20) durch ein Getriebe (23) mit mindestens einer Kraftübertragungseinrichtung (25, 29a) mit der Steuerwelle (30) derart in Verbindung steht, dass in Abhängigkeit von der Position des Auslegers (19a) die Tragfläche (35) eine dazu korrespondierende Stellung zur Strömungsrichtung des strömenden Mediums einnimmt.

2. Einrichtung nach Anspruch 1
**dadurch gekennzeichnet,**
**dass** die Kraftübertragungseinrichtung (15, 25, 29a) flexibel ausgebildet ist.

3. Einrichtung nach einem der voranstehenden Ansprüche,
**dadurch gekennzeichnet,**
**dass** das Getriebe (23) mindestens zwei in Reihe geschaltete flexible Kraftübertragungseinrichtungen (25, 29a) umfasst, wobei die erste Kraftübertragungseinrichtung (25) an ihrem einen Ende mit dem zweiten Kurbeltrieb (20) und an ihrem anderen schlaufenartigen Ende mit einem drehbaren ersten Getriebekörper (29) angeordnet ist.

4. Einrichtung nach einem der voranstehenden Ansprüche,
**dadurch gekennzeichnet,**
**dass** der erste Getriebekörper (29) mit einem zweiten Getriebekörper (24) starr gekoppelt ist, wobei der zweite Getriebekörper (24) durch eine flexible Gliedschlaufe (29a) mit der Steuerwelle (30) in Verbindung steht.

5. Einrichtung nach einem der voranstehenden Ansprüche,
**dadurch gekennzeichnet,**
**dass** die Steuerwelle (30) einen dritten Getriebekörper (33) für die flexible Gliedschlaufe (29a) aufweist.

6. Einrichtung nach einem der voranstehenden Ansprüche,
**dadurch gekennzeichnet,**
**dass** die flexible Kraftübertragungseinrichtung Kraftübertragungsglieder (16, 17; 26, 27) in Form von Riemen oder Gliederketten aufweist.

7. Einrichtung nach einem der voranstehenden Ansprüche,
**dadurch gekennzeichnet,**
**dass** die Gliedschlaufe (29a) als Riemen oder Gliederkette ausgebildet ist.

8. Einrichtung nach einem der voranstehenden Ansprüche,
**dadurch gekennzeichnet,**
**dass** der drehbare Körper (19) sowie der Getriebekörper als Trommel oder Zahnrad ausgebildet sind.

9. Einrichtung nach einem der voranstehenden Ansprüche,
**dadurch gekennzeichnet,**
**dass** der erste Kurbeltrieb (10) zwei Kurbelarme (11, 12) umfasst, die seitlich versetzt auf der Kurbelwelle (1) angeordnet sind, wobei jeder Kurbelarm (11, 12) ein flexibles Kraftübertragungselement (16, 17) der flexiblen Kraftübertragungseinrichtung (15) aufweist, wobei die beiden Kraftübertragungselemente (16, 17) mit und gegen den Uhrzeigersinn von dem drehbaren Körper (19) des Auslegers (19a) aufgenommen sind.

10. Einrichtung nach einem der voranstehenden Ansprüche,
**dadurch gekennzeichnet,**
**dass** der zweite Kurbeltrieb (20) zwei Kurbelarme (21, 22) umfasst, die seitlich versetzt auf der Kurbelwelle (1) angeordnet sind, wobei jeder Kurbelarm (21, 22) ein flexibles Kraftübertragungselement (26, 27) der Kraftübertragungseinrichtung (25) des Getriebes (23) aufweist, wobei die beiden Kraftübertragungselemente (26, 27) im und gegen den Uhrzeigersinn auf dem ersten Getriebekörper (29) angeordnet sind.

11. Einrichtung nach einem der voranstehenden Ansprüche,
**dadurch gekennzeichnet,**
**dass** die beiden Kurbeltriebe (10, 20) in einem festen Winkel zueinanderstehen.

12. Einrichtung nach Anspruch 11,
**dadurch gekennzeichnet,**
**dass** der Winkel der Kurbelarme (11, 12; 21, 22) beider Kurbeltriebe (10, 20) relativ zueinander veränderbar ist.

13. Einrichtung nach einem der voranstehenden Ansprüche
**dadurch gekennzeichnet,**
**dass** die flexiblen Kraftübertragungsglieder (16, 17; 26, 27) jeweils eine Längenkompensationseinrichtung (40) aufweisen.

14. Einrichtung nach einem der voranstehenden Ansprüche,
**dadurch gekennzeichnet,**
**dass** die Längenkompensationseinrichtung (40) eine Federeinrichtung (43) umfasst, wobei die Auslenkung der Federeinrichtung (43) begrenzbar ist.

15. Einrichtung nach einem der voranstehenden Ansprüche,
**dadurch gekennzeichnet,**
**dass** die Federeinrichtung (43) eine Zugfeder umfasst.

16. Einrichtung nach einem der voranstehenden Ansprüche,
**dadurch gekennzeichnet,**
**dass** die Federeinrichtung (43) eine Kolbenzylinderanordnung umfasst.

17. Einrichtung nach einem der voranstehenden Ansprüche,
**dadurch gekennzeichnet,**
**dass** die Federeinrichtung (43) am Kurbelarm (11, 12; 21, 22), angeordnet ist, wobei der Kurbelarm einen Anschlagrahmen (41) aufweist, wobei die Auszugsweite der Federeinrichtung (43) durch den Anschlagrahmen (41) begrenzt ist.

18. Einrichtung nach einem der voranstehenden Ansprüche,
**dadurch gekennzeichnet,**
**dass** die Federeinrichtung (43) über einen Stopper (42) verfügt, der gegen einen Anschlag (47) am Anschlagrahmen (41) stößt.

19. Einrichtung nach einem der voranstehenden Ansprüche,
**dadurch gekennzeichnet,**
**dass** der Winkel (α) zwischen den Kurbelarmen (11, 12; 21, 22) eines Kurbelarmpaares ≤180 Grad beträgt.

20. Einrichtung nach Anspruch 19,
**dadurch gekennzeichnet,**
**dass** der Winkel (α) zwischen den Kurbelarmen (11, 12; 21, 22) eines Kurbeltriebes ≥ 90 Grad beträgt.

21. Einrichtung nach einem der voranstehenden Ansprüche,
**dadurch gekennzeichnet,**
**dass** der Winkel (α) zwischen den Kurbelarmen (11, 12) des einen Kurbeltriebes (10) unterschiedlich ist zu denen des anderen Kurbeltriebes (20) mit den Kurbelarmen (21, 22).

22. Einrichtung nach einem der voranstehenden Ansprüche,
**dadurch gekennzeichnet,**
**dass** der drehbare Körper (19) und/oder der Getriebekörper (29) eine im Querschnitt ovale Form zeigen.

## Claims

1. A device for transmitting energy between a flowing medium and a crankshaft (1) on which a motor or a generator is arranged, wherein the device includes an oscillating wing (35),
**characterized in that**
the wing (35) is rigidly fastened to a control shaft (30), wherein the control shaft (30) is rotatably held by a cantilever (19a), wherein the cantilever (19a) is disposed on a rotatable body (19), wherein the rotatable body (19) is connected with the crankshaft (1) by means of a force transmitting device (15) and a first crank drive (10),
wherein a second crank drive (20) is disposed on the crankshaft (1), wherein the second crank drive (20) is connected with the control shaft (30) by means of a transmission (23) with at least one force transmitting device (25, 29a) in such a manner that depending on the position of the cantilever (19a), the wing (35) takes up a corresponding position relative to the flow direction of the flowing medium.

2. The device according to claim 1,
**characterized in that**
the force transmitting device (15, 25, 29a) is formed so as to be flexible.

3. The device according to one of the afore-mentioned claims, **characterized in that**
the transmission (23) includes at least two series-connected flexible force transmitting devices (25, 29a), wherein the first force transmitting device (25) is disposed with the second crank drive (20) at one of its ends, and with a rotatable first transmission body (29) at its other loop-like end.

4. The device according to one of the afore-mentioned claims, **characterized in that**
the first transmission body (29) is rigidly coupled with a second transmission body (24), wherein the second transmission body (24) is connected with the control shaft (30) by means of a flexible loop member (29a).

5. The device according to one of the afore-mentioned claims, **characterized in that**
the control shaft (30) comprises a third transmission body (33) for the flexible loop member (29a).

6. The device according to one of the afore-mentioned claims, **characterized in that**
the flexible force transmitting device comprises force transmitting members (16, 17; 26, 27) in the form of belts or link chains.

7. The device according to one of the afore-mentioned claims, **characterized in that**
the loop member (29a) is formed as a belt or link chain.

8. The device according to one of the afore-mentioned claims, **characterized in that**
the rotatable body (19) and the transmission body are formed as a cylinder or gear wheel.

9. The device according to one of the afore-mentioned claims, **characterized in that**
the first crank drive (10) includes two crank arms (11, 12), which are disposed on the crankshaft (1) in a laterally offset manner, wherein each crank arm (11, 12) comprises a flexible force transmitting element (16, 17) of the flexible force transmitting device (15), wherein the two force transmitting elements (16, 17) are received in the clockwise and counter-clockwise directions by the rotatable body (19) of the cantilever (19a).

10. The device according to one of the afore-mentioned claims, **characterized in that**
the second crank drive (20) comprises two crank arms (21, 22), which are disposed on the crankshaft (1) in a laterally offset manner, wherein each crank arm (21, 22) comprises a flexible force transmitting element (26, 27) of the flexible force transmitting device (25) of the transmission (23), wherein the two force transmitting elements (26, 27) are received in the clockwise and counter-clockwise directions on the first transmission body (29).

11. The device according to one of the afore-mentioned claims, **characterized in that**
the two crank drives (10, 20) are arranged at a fixed angle relative to each other.

12. The device according to claim 11,
**characterized in that**
the angle of the crank arms (11, 12; 21, 22) of both crank drives (10, 20) relative to each other is changeable.

13. The device according to one of the afore-mentioned claims, **characterized in that**
the flexible force transmitting members (16, 17; 26, 27) comprise respectively one length compensation device (40).

14. The device according to one of the afore-mentioned claims, **characterized in that**
the length compensation device (40) comprises a spring device (43), wherein the deflection of the spring device (43) can be limited.

15. The device according to one of the afore-mentioned claims, **characterized in that**
the spring device (43) comprises a tension spring.

16. The device according to one of the afore-mentioned claims, **characterized in that**
the spring device (43) comprises a piston-cylinder arrangement.

17. The device according to one of the afore-mentioned claims, **characterized in that**
the spring device (43) is disposed on the crank arm (11, 12; 21, 22), wherein the crank arm comprises a stop frame (41), wherein the extension length of the spring device (43) is limited by the stop frame (41).

18. The device according to one of the afore-mentioned claims, **characterized in that**
the spring device (43) possesses a stopper (42), which abuts against a limit-stop (47) on the stop frame (41).

19. The device according to one of the afore-mentioned claims, **characterized in that**
the angle (α) between the crank arms (11, 12; 21, 22) of a pair of crank arms is ≤ 180 degrees.

20. The device according to claim 19,
**characterized in that**
the angle (α) between the crank arms (11, 12; 21, 22) of a crank drive is ≥ 90 degrees.

21. The device according to one of the afore-mentioned claims, **characterized in that**
the angle (α) between the crank arms (11, 12) of one of the crank drives (10) is different from that of the other crank drive (20) with the crank arms (21, 22).

22. The device according to one of the afore-mentioned claims, **characterized in that**
the rotatable body (19) and/or the transmission body (29) have an oval shaped cross-section.

## Revendications

1. Dispositif de transmission d'énergie entre un milieu en mouvement et un vilebrequin (1) au niveau duquel est disposé un moteur ou un générateur, le dispositif comprenant une surface portante oscillante (35),
**caractérisé en ce que**
la surface portante (35) est fixée de manière rigide à un arbre de commande (30), l'arbre de commande (30) étant maintenu en rotation par une potence (19a), la potence (19a) étant disposée sur un corps rotatif (19), le corps rotatif (19) étant relié au vilebrequin (1) au moyen d'un dispositif de transmission de force (15) par un premier mécanisme à manivelle (10),
un second mécanisme à manivelle (20) étant disposé sur le vilebrequin (1), le second mécanisme à manivelle (20) étant relié avec l'arbre de commande (30) au moyen d'une transmission (23) avec au moins un dispositif de transmission de force (25, 29a) de telle manière que, selon la position de la potence (19a), la surface portante (35) prend une position correspondante par rapport à la direction d'écoulement du milieu en mouvement.

2. Dispositif selon la revendication 1,
**caractérisé en ce que**
le dispositif de transmission de force (15, 25, 29a) est réalisé de manière flexible.

3. Dispositif selon l'une des revendications précédentes, **caractérisé en ce que**
la transmission (23) comporte au moins deux dispositifs de transmission de force (25, 29a) flexibles connectés en série, le premier dispositif de transmission de force (25) étant pourvu, à l'une de ses extrémités, du second mécanisme à manivelle (20) et, à l'autre extrémité en forme de boucle, d'un premier corps de transmission (29) rotatif.

4. Dispositif selon l'une des revendications précédentes, **caractérisé en ce que**
le premier corps de transmission (29) est accouplé de manière rigide avec un second corps de transmission (24), le second corps de transmission (24) étant relié avec l'arbre de commande (30) par un élément formant une boucle (29a) flexible.

5. Dispositif selon l'une des revendications précédentes, **caractérisé en ce que**
l'arbre de commande (30) comporte un troisième corps de transmission (33) pour l'élément formant une boucle (29a) flexible.

6. Dispositif selon l'une des revendications précédentes, **caractérisé en ce que**
le dispositif de transmission de force flexible comporte des éléments de transmission de force (16, 17 ; 26, 27) sous la forme de courroies ou de chaînes à maillons.

7. Dispositif selon l'une des revendications précédentes, **caractérisé en ce que**
l'élément formant une boucle (29a) est réalisé sous forme de courroie ou de chaîne à maillons.

8. Dispositif selon l'une des revendications précédentes, **caractérisé en ce que**
le corps rotatif (19) ainsi que le corps de transmission sont réalisés sous forme de cylindre ou de roue dentée.

9. Dispositif selon l'une des revendications précédentes, **caractérisé en ce que**
le premier mécanisme à manivelle (10) comporte deux bras de manivelle (11, 12) qui sont disposés de manière latéralement décalée sur le vilebrequin (1), chaque bras de manivelle (11, 12) comportant un élément de transmission de force (16, 17) flexible du dispositif de transmission de force (15) flexible, les deux éléments de transmission de force (16, 17) étant reçus par le corps rotatif (19) de la potence (19a) dans le sens des aiguilles d'une montre et dans le sens contraire.

10. Dispositif selon l'une des revendications précédentes, **caractérisé en ce que**
le second mécanisme à manivelle (20) comporte deux bras de manivelle (21, 22) qui sont disposés de manière latéralement décalée sur le vilebrequin (1), chaque bras de manivelle (21, 22) comportant un élément de transmission de force (26, 27) flexible du dispositif de transmission de force (25) de la transmission (23), les deux éléments de transmission de force (26, 27) étant disposés sur le premier corps de transmission (29) dans le sens des aiguilles d'une montre et dans le sens contraire.

11. Dispositif selon l'une des revendications précédentes, **caractérisé en ce que**
les deux mécanismes à manivelle (10, 20) forment un angle fixe l'un par rapport à l'autre.

12. Dispositif selon la revendication 11,
**caractérisé en ce que**
l'angle formé par les bras de manivelle (11, 12 ; 21, 22) des deux mécanismes à manivelle (10, 20) est modifiable.

13. Dispositif selon l'une des revendications précédentes, **caractérisé en ce que**
les éléments de transmission de force (16, 18 ; 26, 27) flexibles comportent respectivement un dispositif de compensation de longueur (40).

14. Dispositif selon l'une des revendications précédentes, **caractérisé en ce que**
le dispositif de compensation de longueur (40) comprend un dispositif à ressort (43), l'extension du dispositif à ressort (43) pouvant être limitée.

15. Dispositif selon l'une des revendications précédentes, **caractérisé en ce que**
le dispositif à ressort (43) comprend un ressort de traction.

16. Dispositif selon l'une des revendications précédentes, **caractérisé en ce que**
le dispositif à ressort (43) comprend un dispositif cylindre-piston.

17. Dispositif selon l'une des revendications précédentes, **caractérisé en ce que**
le dispositif à ressort (43) est disposé au niveau du bras de manivelle (11, 12 ; 21, 22), le bras de manivelle comportant un cadre de butée (41), la longueur d'extension du dispositif à ressort (43) étant limitée par le cadre de butée (41).

18. Dispositif selon l'une des revendications précédentes, **caractérisé en ce que**
le dispositif à ressort (43) présente un élément d'arrêt (42) qui vient buter contre une butée (47) au niveau du cadre de butée (41).

19. Dispositif selon l'une des revendications précédentes, **caractérisé en ce que**
l'angle (α) entre les bras de manivelle (11, 12 ; 21, 22) d'une paire de bras de manivelle est ≤ 180 degrés.

20. Dispositif selon la revendication 19,
**caractérisé en ce que**
l'angle (α) entre les bras de manivelle (11, 12 ; 21, 22) d'un mécanisme à manivelle est ≥ 90 degrés.

21. Dispositif selon l'une des revendications précédentes, **caractérisé en ce que**
l'angle (α) entre les bras de manivelle (11, 12) de l'un des mécanismes à manivelle (10) est différent de celui de l'autre mécanisme à manivelle (20) avec les bras de manivelle (21, 22).

22. Dispositif selon l'une des revendications précédentes, **caractérisé en ce que**
le corps rotatif (19) et/ou le corps de transmission (29) présente une section transversale de forme ovale.
